# EUROPEAN PATENT APPLICATION

(11) **EP 1 903 083 A1**
(43) Date of publication of application: **26.03.2008**
(21) Application number: 06766586.9
(22) Date of filing: 12.06.2006
(51) Int. Cl.: C09J 133/00, C08F 2/26, C09J 7/02

(54) **(METH)ACRYLIC EMULSION TYPE PRESSURE-SENSITIVE ADHESIVE COMPOSITION AND PRESSURE-SENSITIVE ADHESIVE SHEET**

(30) Priority: 14.07.2005 JP 2005205778
(71) Applicant: Lintec Corporation, Tokyo 173-0001 (JP)
(72) Inventor: SAKUMA, Toshihiko c/o Lintec Corporation, Warabi-shi, Saitama; 3350005 (JP); IKEDA, Fuminori c/o Lintec Corporation, Warabi-shi, Saitama; 3350005 (JP)
(74) Representative: Leifert & Steffan
(86) International application number: PCT/JP2006/311724
(87) International publication number: WO 2007/007499

(57) **Abstract**

The present invention relates to a (meth)acrylic emulsion type adhesive composition comprising an emulsion type (meth)acrylic polymer obtained by emulsion-polymerizing a monomer comprising a (meth)acrylic monomer as a principal component, wherein a sodium salt and/or potassium salt-containing emulsifier is used in the emulsion-polymerization described above, and neutralization treatment is carried out by using a neutralizing agent containing sodium hydroxide and/or potassium hydroxide after the emulsion polymerization is finished and an adhesive sheet obtained by using the above composition, and the present invention provides an adhesive composition which is not yellowed with the passage of time, particularly by heating and an adhesive sheet obtained by using the above composition.

## Description

### BACKGROUND OF THE INVENTION

The present invention relates to a (meth)acrylic emulsion type adhesive composition and an adhesive sheet, specifically to a (meth)acrylic emulsion type adhesive composition which is excellent particularly in a thermal yellowing resistance and an adhesive sheet obtained by using the above composition.

### RELATED ART

Solvent type acryl base resins have so far been used as adhesives for film substrates. In recent years, however, they are being quickly switched over to water base emulsion type adhesives as alternatives for solvent type adhesives from the viewpoints of an improvement in global environment and labor environment, efficient use of resources and the like.
However, emulsion type adhesives involve the problem that they are changed in a hue and yellowed with the passage of time, particularly with the passage of time under heating.
Further, involved therein is the problem that low molecular components of an initiator required when preparing an emulsion type adhesive and a cross-linking agent and the like which are added if necessary are decomposed with the passage of time, particularly with the passage of time under heating, whereby the hue is changed.

It is proposed as means for solving the problem of yellowing described above to add a polycarboxylic acid compound to an emulsion type adhesive (for example, a patent document 1), but it is still unsatisfactory and leads to a rise in the cost.

Patent document 1: Japanese Patent Application Laid-Open No. 307599/2004

### DISCLOSURE OF THE INVENTION

The present invention has been made in light of the situations described above, and an object thereof is to provide a (meth)acrylic emulsion type adhesive composition which is not yellowed with the passage of time, particularly with the passage of time under heating and which has an excellent quality and an adhesive sheet obtained by using the above composition.

Intensive researches repeated by the present inventors in order to achieve the object described above have resulted in finding that a (meth)acrylic emulsion type adhesive composition obtained by using a sodium salt and/or potassium salt-containing emulsifier when emulsion-polymerizing a monomer comprising a (meth)acrylic monomer as a principal component and using sodium hydroxide and/or potassium hydroxide as a neutralizing agent for neutralization treatment after finishing the emulsion polymerization is excellent in a yellowing resistance.
The present invention has been completed based on the above finding

That is, the present invention provides:
1. a (meth)acrylic emulsion type adhesive composition comprising an emulsion type (meth)acrylic polymer obtained by emulsion-polymerizing a monomer comprising a (meth)acrylic monomer as a principal component, wherein a sodium salt and/or potassium salt-containing emulsifier is used in the emulsion-polymerization described above, and neutralization treatment is carried out by using a neutralizing agent containing sodium hydroxide and/or potassium hydroxide after the emulsion polymerization is finished,
2. the (meth)acrylic emulsion type adhesive composition as described in the above item 1, wherein a content of the sodium salt and/or potassium salt-containing emulsifier is 0.3 to 5 mass parts per 100 mass parts of the monomer comprising a (meth)acrylic monomer as a principal component,
3. the (meth)acrylic emulsion type adhesive composition as described in the above item 1 or 2, wherein a content of the sodium salt and/or potassium salt-containing emulsifier is 5 to 95 mass % based on the whole emulsifier,
4. the (meth)acrylic emulsion type adhesive composition as described in the above item 1 or 2, wherein a content of sodium hydroxide and/or potassium hydroxide is 8 to 85 mass % based on the whole neutralizing agent,
5. an adhesive sheet comprising a substrate sheet and an adhesive layer formed on at least one surface of the substrate sheet by using the (meth)acrylic emulsion type adhesive composition as described in the above item 1 or 2 and
6. the adhesive sheet as described in the above item 5, wherein ΔYI measured after the adhesive sheet is adhered on a slide glass and left standing for 168 hours under an atmosphere of 130°C is 1.0 or less.

The (meth)acrylic emulsion type adhesive composition obtained by carrying out emulsion polymerization using a sodium salt and/or potassium salt-containing emulsifier and using sodium hydroxide and/or potassium hydroxide as a neutralizing agent is excellent in a thermal yellowing resistance, and an adhesive sheet prepared by using the above composition is very excellent from a practical point of view.

### BEST MODE FOR CARRYING OUT THE INVENTION

The present invention shall be explained below in details.
The (meth)acrylic emulsion type adhesive composition of the present invention is obtained by emulsion-polymerizing a monomer (hereinafter called "the raw material monomer") comprising a (meth)acrylic monomer as a principal component.
The (meth)acrylic monomer includes (meth)acrylates of alkyl alcohols having 1 to 14 carbon atoms and cyclic saturated alcohols.
Among them, (meth)acrylate of alcohol having 4 to 12 carbon atoms is preferred as the (meth)acrylic monomer.
The above (meth)acrylic monomer includes methyl (meth)acrylate, ethyl (meth)acrylate, n-propyl (meth)acrylate, isopropyl (meth)acrylate, n-butyl (meth)acrylate, isobutyl (meth)acrylate, n-hexyl (meth)acrylate, 2-ethylhexyl (meth)acrylate, isooctyl (meth)acrylate, n-octyl (meth)acrylate, nonyl (meth)acrylate, isononyl (meth)acrylate, decyl (meth)acrylate, isodecyl (meth)acrylate, undecyl (meth)acrylate, isoundecyl (meth)acrylate, dodecyl (meth)acrylate, isododecyl (meth)acrylate, benzyl (meth)acrylate, cyclohexyl (meth)acrylate and the like.
A content of the (meth)acrylic monomer which is the principal component of the raw material monomer is 85 to 99.8 mass %, preferably 88 to 99 mass % based on the raw material monomer.

In the present invention, a cross-linking monomer can also be used as the raw material monomer together with the (meth)acrylic monomer which is the principal component.
The cross-linking monomer includes, to be specific, carboxyl group-containing unsaturated monomers, alcoholic hydroxyl group-containing unsaturated monomers, carbonyl group-containing unsaturated monomers and the like.
The carboxyl group-containing unsaturated monomers shall not specifically be restricted and include, for example, acrylic acid, acrylic acid dimers, methacrylic acid, crotonic acid, itaconic acid, maleic acid and the like. Among them, acrylic acid and methacrylic acid are preferably used.
The above monomers can be contained in the raw material monomer in a proportion of 0.1 to 10 mass %, preferably 0.5 to 8 mass %.
The alcoholic hydroxyl group-containing unsaturated monomers include 2-hydroxyethyl (meth)acrylate, hydroxypropyl (meth)acrylate, 2-hydroxybutyl (meth)acrylate and the like, and the above monomers can contained in the raw material monomer in a proportion of 0 to 10 mass %, preferably 0 to 8 mass %.
The carbonyl group-containing unsaturated monomers include acetoacetoxyethyl acrylate, diacetoneacrylamide and the like and can be contained in the raw material monomer in a proportion of 0 to 10 mass %, preferably 0 to 8 mass %.

In the present invention, a copolymerizable vinyl monomer can also be further used in addition to the compounds described above.
The vinyl monomer includes polyethylene glycol acrylate, glycidyl acrylate, mono-(2-hydroxyethyl-a-chloroaczylate) acid phosphate, vinyl block isocyanate and the like, N-methylolacrylamide, N-methylolmethacrylamide, N-methylaminoethyl acrylate, N-butylaminoethyl acrylate, N,N-dimethylaminoethyl acrylate, N,N-dimethylaminoethyl methacrylate, acrylamide, methacrylamide, vinylpyrrolidone, vinyl esters, vinylpyridine, vinyl acetate, vinyl propionate, styrene, acrylonitrile, methacrylonitrile, butadiene, chloroprene and the like. They can be contained in the raw material monomer in a proportion of 0 to 10 mass %, preferably 0 to 8 mass %.

A polymerization initiator used in emulsion-polymerizing the raw material monomer of the present invention shall not specifically be restricted and includes, for example, azo base compounds such as 2,2'-azobis(2-methylpropionamidine) dibasic acid salts, 2,2'-azobis(2-amidinopropane) dihydrochloride and the like, persulfates such as potassium persulfate, sodium persulfate, ammonium persulfate and the like, peroxides such as benzoyl peroxide, t-butyl hydroperoxide, hydrogen peroxide and the like and redox base polymerization initiators comprising combinations of persulfates and sodium hydrogensulfite, combinations of peroxides and sodium ascorbate and the like.
The above polymerization initiators are usually added in a prescribed amount at the respective stages in emulsion polymerization to carry out polymerization reaction.

Also, in emulsion-polymerizing the raw material monomer of the present invention, a chain transfer agent can be used in order to control the polymerization degree.

Further, in emulsion-polymerizing the raw material monomer of the present invention, various emulsifiers are used in order to secure the polymerization stability.
In using the emulsifier, a content of the sodium salt and/or potassium salt-containing emulsifier is 0.3 to 5 mass parts, preferably 0.5 to 4 mass parts per 100 mass parts of the whole amount of the raw material monomer.
If a content of the sodium salt and/or potassium salt-containing emulsifier falls in a range of 0.3 to 5 mass parts, the thermal yellowing resistance is enhanced, and the water whitening resistance is improved.
In using the emulsifier, a content of the sodium salt and/or potassium salt-containing emulsifier is preferably 5 to 95 mass %, more preferably 10 to 90 mass % based on the whole emulsifier.
If a content of the sodium salt and/or potassium salt-containing emulsifier falls in a range of 5 to 95 mass % based on the whole emulsifier, the thermal yellowing resistance is enhanced, and the water whitening resistance is improved.
The sodium salt-containing emulsifier or the potassium salt-containing emulsifier includes reactive emulsifiers and non-reactive emulsifiers.
The sodium salt or potassium salt-containing reactive emulsifier shall not specifically be restricted and includes, for example, compounds represented by Formulas (1) to (9):

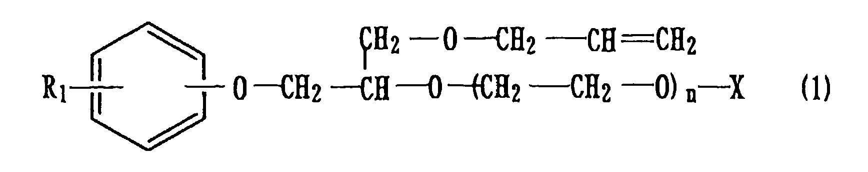

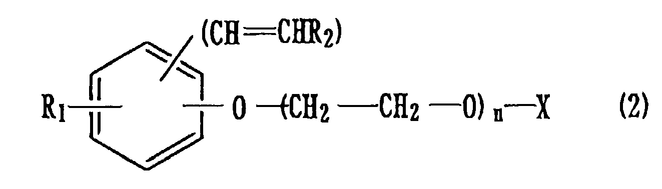

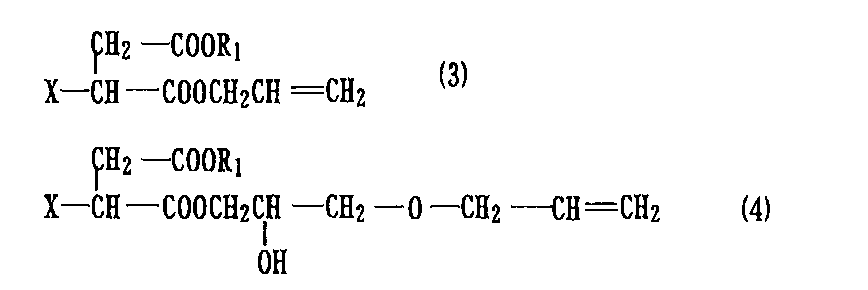

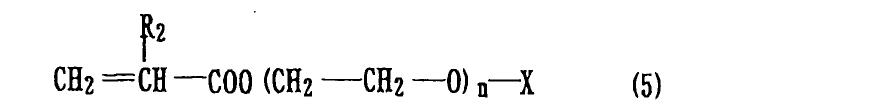

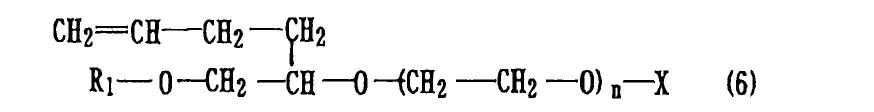

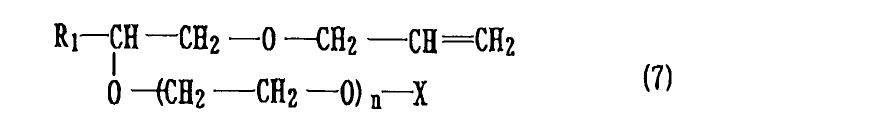

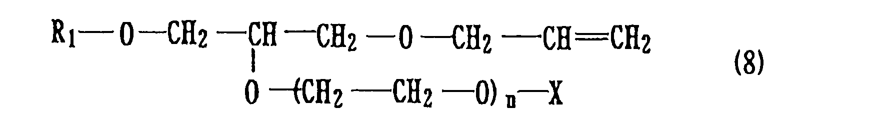

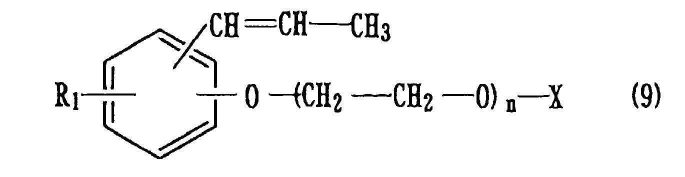

(wherein X represents SO₃Na or SO₃K; R₁ represents an alkyl group; R₂ represents hydrogen or methyl; and n represents an integer of 1 or more).
The sodium salt and/or potassium salt-containing non-reactive emulsifier shall not specifically be restricted and includes, for example, sodium salts of fatty acids such as oleic acid, stearic acid and the like, potassium salts of fatty acids such as oleic acid, stearic acid and the like, sodium alkylsulfate, potassium alkylsulfate, sodium alkylbenzenesulfonate, potassium alkylbenzenesulfonate, sodium alkylsulfosuccinate, potassium alkylsulfosuccinate, sodium alkylphenyletherdisulfonate, potassium alkylphenyletherdisulfonate, sodium polyoxyethylenealkylsulfate, potassium polyoxyethylenealkylsulfate, sodium polyoxyethylenealkylphosphate, potassium polyoxyethylenealkylphosphate, sodium polyoxyethylenealkylethersulfate, potassium polyoxyethylenealkylethersulfate and the like.

If a content of the sodium salt and/or potassium salt-containing emulsifier is 0.3 to 5 mass parts per 100 mass parts of the whole amount of the raw material monomer, at least one of the other anionic emulsifiers, cationic emulsifiers and nonionic emulsifiers may be used in combination, and these emulsifiers may be non-reactive emulsifiers or reactive emulsifiers.
The other anionic emulsifiers shall not specifically be restricted and include, for example, compounds represented by Formulas (10) to (18):

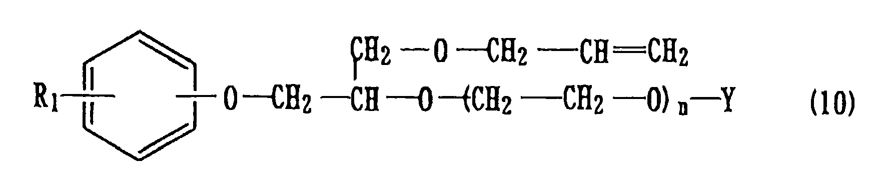

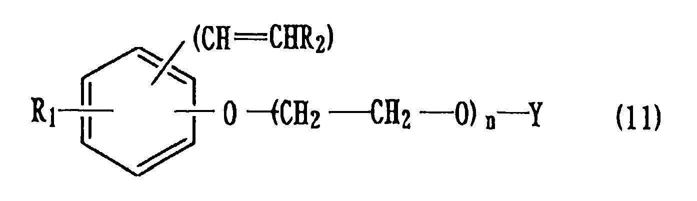

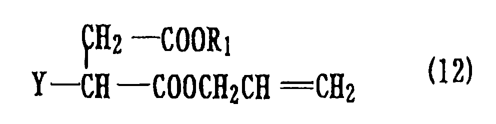

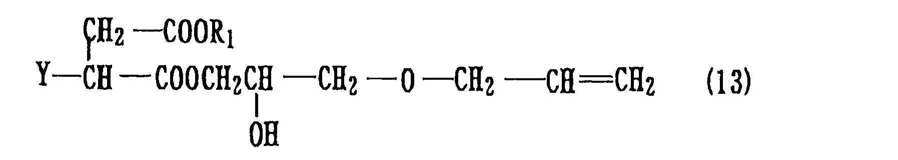

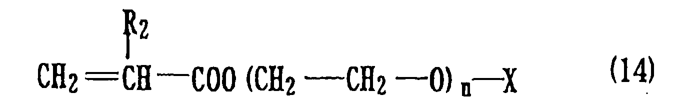

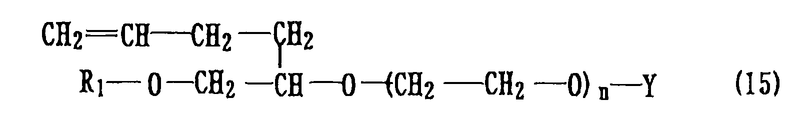

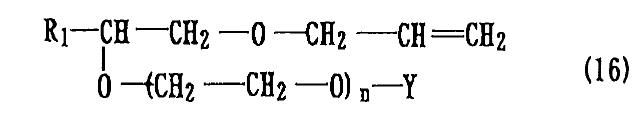

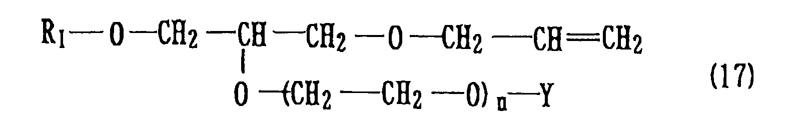

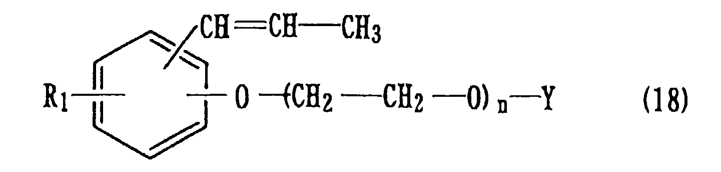

(wherein Y represents SO₃NH₄; R₁, R₂ and n are the same as described above).
The non-reactive emulsifier shall not specifically be restricted and includes, for example, ammonium alkylsulfate, ammonium alkylbenzenesulfonate, ammonium alkylsulfosuccinate, ammonium alkylphenyletherdisulfonate, ammonium polyoxyethylenealkylsulfate, ammonium polyoxyethylenealkylphosphate, ammonium polyoxyethylenealkylethersulfate and the like.
The other cationic emulsifiers shall not specifically be restricted and include, for example, long chain alkylammonium salts, long chain alkyl-quaternary-ammonium salts and the like.
Further, the other nonionic emulsifiers shall not specifically be restricted and include, for example, polyoxyethylene alkyl ethers, polyoxyethylene alkylphenyl ethers and the like.
In the present invention, the whole amount of the emulsifiers used is 0.4 to 10 mass parts, preferably 0.5 to 8 mass parts per 100 mass parts of the whole amount of the raw material monomer.

In the present invention, neutralization treatment is carried out by using the neutralizing agent containing sodium hydroxide and/or potassium hydroxide after emulsion-polymerizing the raw material monomer, and the pH is controlled to a prescribed value, whereby a stable water-dispersed polymer (a (meth)acrylic emulsion type adhesive composition) can be obtained.
In using the neutralizing agent, a content of sodium hydroxide and/or potassium hydroxide in the whole neutralizing agent is preferably 8 to 85 mass %, more preferably 10 to 80 mass %.
If a content of sodium hydroxide and/or potassium hydroxide in the whole neutralizing agent is 8 to 85 mass %, the thermal yellowing resistance is enhanced, and the water whitening resistance is improved.
When using sodium hydroxide and potassium hydroxide in combination, a combined use proportion thereof shall not specifically be restricted and is suitably selected according to the uses and the like.
A neutralizing agent other than sodium hydroxide and potassium hydroxide which can be used in combination shall not specifically be restricted and includes ammonia and the like.
The neutralizing agent is added in a suitable amount so that the water-dispersed polymer (emulsified polymer) is controlled to prescribed pH.

Publicly known various additives such as defoaming agents, preservatives, rust preventives, solvents, tackifiers, thickeners, cross-linking agents, plasticizers, wetting agents, fillers including inorganic powders, metal powders and the like, pigments, colorants and the like can be added, if necessary, to the (meth)acrylic emulsion type adhesive composition of the present invention as long as the effects of the present invention are not damaged.
The adhesive sheet of the present invention comprises a substrate sheet and an adhesive layer formed on at least one surface of the substrate sheet by using the (meth)acrylic emulsion type adhesive composition of the present invention described above.
The substrate sheet described above shall not specifically be restricted and is suitably selected according to the use purposes of the above adhesive sheet.
It includes, for example, various papers such as woodfree paper, art paper, coated paper, glassine paper and laminated paper prepared by laminating thermoplastic resins such as polyethylene and the like on the above paper substrates, various synthetic papers, metal foils such as aluminum foil, copper foil, iron foil and the like, porous materials such as unwoven cloths and the like, plastic films and sheets of polyolefin resins such as polyethylene, polypropylene and the like, polyester resins such as polybutylene terephthalate, polyethylene terephthalate and the like, acetate resins, ABS resins, polystyrene resins, vinyl chloride resins and the like and plastic films and sheets comprising mixtures or laminates of the above rresins.
The substrate sheet such as the plastic films and sheets and the like may be unstretched or stretched in a vertical or lateral, monoaxial or biaxial direction.
The substrate may be colored or colorless and transparent.
The surface or rear face of the substrate may be printed or provided with printed characters, and for this purpose, a thermosensitive recording layer, a printing and image-receiving layer which makes it possible to carry out heat transfer, ink jet, laser printing and the like, a printability improving layer and the like may be provided on the substrate sheet.
The substrate sheet can be subjected, if necessary, to surface treatment by an oxidation method, an irregularity method and the like in order to improve an adhesive property thereof with an adhesive layer provided thereon.
Further, it may be subjected to primer treatment, and a filling layer may be provided.
A thickness of the substrate shall not specifically be restricted and is usually 10 to 250 µm.
A method for coating the (meth)acrylic emulsion type adhesive composition on the substrate sheet described above shall not specifically be restricted, and publicly known coating methods can be used and include, for example, methods using coating equipments such as a knife coater, a roll coater, a roll knife coater, an air knife coater, a bar coater, a die coater, a curtain coater, a gravure coater and the like.
A thickness of the adhesive layer shall not specifically be restricted and is usually 5 to 60 µm, preferably 10 to 40 µm.
In the adhesive sheet of the present invention, a release sheet can be provided, if necessary, on the adhesive layer thus formed.
The above release sheet includes, for example, sheets obtained by coating release agents such as a fluororesin, a silicone resin and the like on high density base papers such as glassine paper and the like, clay coated paper, craft paper, laminated paper obtained by laminating a resin such as a polyethylene resin and the like, paper such as woodfree paper and the like and plastic films of polyethylene terephthalate, polyethylene naphthalate and the like in an amount of 0.1 to 3 g/m² in terms of a dried mass to provide a release layer by thermal curing and UV ray curing.
A thickness of the above release sheet shall not specifically be restricted and is usually 25 to 200 µm.
The thicknesses of the substrate, the adhesive layer and the adhesive sheet having the release sheet laminated thereon shall not specifically be restricted and are usually 30 to 300 µm.

### EXAMPLES

Next, the present invention shall be explained in further details with reference to examples, but the present invention shall by no means be restricted by these examples.
The thermal yellowing resistances of the adhesive sheets obtained in the respective examples were measured according to the following method.
The release sheet of the adhesive sheet was peeled, and then the adhesive sheet was adhered on a slide glass. It was exposed under an environment of 130°C for 168 hours, and then in accordance with JIS K7105, ΔYI (yellowing degree) before and after exposure was calculated by means of SQ-2000 manufactured by Nippon Denshoku Industries Co., Ltd.

### Example 1

### (1) Emulsion polymerization

A beaker was charged in advance with 48 mass parts of butyl acrylate, 48 mass parts of 2-ethylhexyl acrylate, 1 mass part of methyl methacrylate, 3 mass parts of acrylic acid, 1 mass part of LATEMUL WX (sodium polyoxyethylenealkylethersulfate (non-reactive emulsifier), manufactured by Kao Corporation) as an emulsifier in terms of a solid matter based on the whole above monomers and 33.3 mass parts of deionized water, and the mixture was stirred to prepare an emulsion.
A reactor equipped with a stirrer, a reflux condenser, a thermometer, a nitrogen introducing tube and a dropping funnel was charged with 41 mass parts of deionized water and 1 mass part of EMAL AD-25R (ammonium laurylsulfate (non-reactive emulsifier), manufactured by Kao Corporation) as an emulsifier in terms of a solid matter.
The inner temperature was elevated up to 80°C while allowing nitrogen gas to flow, and 10 mass parts of the emulsion described above was added thereto. Then, the reactor was charged with 5 mass parts (0.15 mass part in terms of a solid matter) of a 3 mass % solution of potassium persulfate as a polymerization initiator prepared by using deionized water.
Next, emulsion polymerization was carried out at an inner temperature of 83°C while dropwise adding 124.3 mass parts of the remaining emulsifier described above in 4 hours in parallel with 0.4 mass part of a 3 mass % solution of potassium persulfate as a polymerization initiator prepared by using deionized water.
After finishing dropwise adding, the mixture was ripened at the above temperature for 3 hours and then cooled down to room temperature.
Then, 28 mass % aqueous ammonia and a 28 mass % sodium hydroxide aqueous solution were added as neutralizing agents to the polymerization reaction liquid so that pH was controlled to 7 and an amount of sodium hydroxide accounted for 50 mass % based on the whole amount of the neutralizing agents, whereby a water-dispersed liquid (a (meth)acrylic emulsion type adhesive composition) of a (meth)acrylic copolymer was obtained.

### (2) Preparation of adhesive sheet

The (meth)acrylic emulsion type adhesive composition prepared in (1) described above was coated on a release sheet "SP-8LK2" (thickness: 90 µm, manufactured by Lintec Corporation) so that a thickness after dried was 25 µm and then dried at 90°C for 1 minute, and the sheet was adhered on a polyethylene terephthalate film (trade name: Lumirror T-60, manufactured by Toray Industries, Inc.) having a thickness of 50 µm to prepare an adhesive sheet.
A thermal yellowing resistance ΔYI of the above adhesive sheet was measured. The result thereof is shown in Table 1.

### Example 2

An adhesive sheet was prepared in the same manner as in Example 1, except that in Example 1, OS SOAP (potassium oleate soap (non-reactive emulsifier), manufactured by Kao Corporation) was used as the emulsifier in place of LATEMUL WX (sodium polyoxyethylenealkylethersulfate, manufactured by Kao Corporation), and a thermal yellowing resistance thereof was measured. The result thereof is shown in Table 1.

### Example 3

An adhesive sheet was prepared in the same manner as in Example 1, except that in Example 1, a potassium hydroxide aqueous solution was used as the neutralizing agent in place of the sodium hydroxide aqueous solution, and a thermal yellowing resistance thereof was measured. The result thereof is shown in Table 1.

### Example 4

An adhesive sheet was prepared in the same manner as in Example 1, except that in Example 1, OS SOAP (potassium oleate soap, manufactured by Kao Corporation) was used as the emulsifier in place of LATEMUL WX (sodium polyoxyethylenealkylethersulfate, manufactured by Kao Corporation) and that a 28 mass % potassium hydroxide aqueous solution was used as the neutralizing agent in place of the 28 mass % sodium hydroxide aqueous solution, and a thermal yellowing resistance thereof was measured. The result thereof is shown in Table 1.

### Example 5

An adhesive sheet was prepared in the same manner as in Example 1, except that in Example 1, an addition amount of LATEMUL WX (sodium polyoxyethylenealkylethersulfate, manufactured by Kao Corporation) as the emulsifier was changed to 4 mass parts in terms of a solid matter, and a thermal yellowing resistance thereof was measured. The result thereof is shown in Table 1.

### Example 6

An adhesive sheet was prepared in the same manner as in Example 1, except that in Example 1, the 28 mass % sodium hydroxide aqueous solution used as the neutralizing agent was added so that a proportion of sodium hydroxide contained in the 28 mass % sodium hydroxide aqueous solution accounted for 80 mass % based on the whole amount of the neutralizing agents, and a thermal yellowing resistance thereof was measured. The result thereof is shown in Table 1.

### Example 7

An adhesive sheet was prepared in the same manner as in Example 1, except that in Example 1, the 28 mass % sodium hydroxide aqueous solution used as the neutralizing agent was added so that a proportion of sodium hydroxide contained in the 28 mass % sodium hydroxide aqueous solution accounted for 10 mass % based on the whole amount of the neutralizing agents, and a thermal yellowing resistance thereof was measured. The result thereof is shown in Table 1.

### Example 8

An adhesive sheet was prepared in the same manner as in Example 1, except that in Example 1, 0.5 mass part of LATEMUL WX (sodium polyoxyethylenealkylethersulfate, manufactured by Kao Corporation) in terms of a solid matter and 0.5 mass part of OS SOAP (potassium oleate soap, manufactured by Kao Corporation) in terms of a solid matter were used as the emulsifiers in place of LATEMUL WX (sodium polyoxyethylenealkylethersulfate, manufactured by Kao Corporation), and a thermal yellowing resistance thereof was measured. The result thereof is shown in Table 1.

### Example 9

An adhesive sheet was prepared in the same manner as in Example 1, except that in Example 1, the 28 mass % sodium hydroxide aqueous solution used as the neutralizing agent was added so that a proportion of sodium hydroxide contained in the 28 mass % sodium hydroxide aqueous solution accounted for 25 mass % based on the whole amount of the neutralizing agents and that the 28 mass % potassium hydroxide aqueous solution used as the neutralizing agent was added so that a proportion of potassium hydroxide contained in the 28 mass % potassium hydroxide aqueous solution accounted for 25 mass % based on the whole amount of the neutralizing agents, and a thermal yellowing resistance thereof was measured. The result thereof is shown in Table 1.

### Example 10

An adhesive sheet was prepared in the same manner as in Example 1, except that in Example 1, LATEMUL S-180A (sodium alkyl 3-allyl-2-hydroxypropylsulfosuccinate (reactive emulsifier), manufactured by Kao Corporation) was used as the emulsifier in place of LATEMUL WX (sodium polyoxyethylenealkylethersulfate, manufactured by Kao Corporation), and a thermal yellowing resistance thereof was measured. The result thereof is shown in Table 1.

### Comparative Example 1

An adhesive sheet was prepared in the same manner as in Example 1, except that in Example 1, 2 mass parts of EMAL AD-25R (ammonium laurylsulfate, manufactured by Kao Corporation) in terms of a solid matter was used as the emulsifier and that only aqueous ammonia was used as the neutralizing agent, and a thermal yellowing resistance thereof was measured. The result thereof is shown in Table 1.

### Comparative Example 2

An adhesive sheet was prepared in the same manner as in Example 1, except that in Example 1, only aqueous ammonia was used as the neutralizing agent, and a thermal yellowing resistance thereof was measured. The result thereof is shown in Table 1.

### Comparative Example 3

An adhesive sheet was prepared in the same manner as in Example 1, except that in Example 1, OS SOAP (potassium oleate soap (non-reactive emulsifier), manufactured by Kao Corporation) was used as the emulsifier in place of LATEMUL WX (sodium polyoxyethylenealkylethersulfate, manufactured by Kao Corporation) and that only aqueous ammonia was used as the neutralizing agent, and a thermal yellowing resistance thereof was measured. The result thereof is shown in Table 1.

### Comparative Example 4

An adhesive sheet was prepared in the same manner as in Example 1, except that in Example 1, 2 mass parts of EMAL AD-25R (ammonium laurylsulfate, manufactured by Kao Corporation) in terms of a solid matter was used as the emulsifier, and a thermal yellowing resistance thereof was measured. The result thereof is shown in Table 1.

### Comparative Example 5

An adhesive sheet was prepared in the same manner as in Example 1, except that in Example 1, 2 mass parts of EMAL AD-25R (ammonium laurylsulfate, manufactured by Kao Corporation) in terms of a solid matter was used as the emulsifier and that a 28 mass % potassium hydroxide aqueous solution was used as the neutralizing agent in place of the 28 mass % sodium hydroxide aqueous solution, and a thermal yellowing resistance thereof was measured. The result thereof is shown in Table 1.

**Table 1**

| | Emulsifier (mass part) | | | Neutralizing agent (mass %/whole neutralizing agent amount (100 mass %)] | | | Thermal yellowing resistance (ΔYI) |
|---|---|---|---|---|---|---|---|
| | Na salt | K salt | NH₄ salt | NaOH aqueous solution | KOH aqueous solution | NH₃ aqueous solution | |
| Example 1 | 1 | | 1 | 50 | | 50 | 0.7 |
| Example 2 | | 1 | 1 | 50 | | 50 | 0.7 |
| Example 3 | 1 | | 1 | | 50 | 50 | 0.6 |
| Example 4 | | 1 | 1 | | 50 | 50 | 0.5 |
| Example 5 | 4 | | 1 | 50 | | 50 | 0.3 |
| Example 6 | 1 | | 1 | 90 | | 20 | 0.4 |
| Example 7 | 1 | | 1 | 10 | | 90 | 0.8 |
| Example 8 | 0.5 | 0.5 | 1 | 50 | | 50 | 0.5 |
| Example 9 | 1 | | 1 | 25 | 25 | 50 | 0.6 |
| Example 10 | 1 | | 1 | 50 | | 50 | 0.7 |
| Comparative Example 1 | | | 2 | | | 100 | 2.0 |
| Comparative Example 2 | 1 | | 1 | | | 100 | 1.4 |
| Comparative Example 3 | | 1 | 1 | | | 100 | 1.3 |
| Comparative Example 4 | | | 2 | 50 | | 50 | 1.8 |
| Comparative Example 5 | | | 2 | | 50 | 50 | 1.7 |

As can be found from Table 1, the adhesive sheets (Examples 1 to 10) obtained by using the adhesive compositions which meet the conditions of the present invention show an excellent thermal yellowing resistance.

### INDUSTRIAL APPLICABILITY

The adhesive sheet prepared by using the (meth)acrylic emulsion type adhesive composition of the present invention can be used as adhesive sheets for films and laminates, labels, tapes, building materials and packaging materials, and it is also useful as a general purpose adhesive sheet to which an adhesive force, a weatherability, a transparency and the like are required.

## Claims

1. A (meth)acrylic emulsion type adhesive composition comprising an emulsion type (meth)acrylic polymer obtained by emulsion-polymerizing a monomer comprising a (meth)acrylic monomer as a principal component, wherein a sodium salt and/or potassium salt-containing emulsifier is used in the emulsion-polymerization described above, and neutralization treatment is carried out by using a neutralizing agent containing sodium hydroxide and/or potassium hydroxide after the emulsion polymerization is finished.

2. The (meth)acrylic emulsion type adhesive composition as described in claim 1, wherein a content of the sodium salt and/or potassium salt-containing emulsifier is 0.3 to 5 mass parts per 100 mass parts of the monomer comprising a (meth)acrylic monomer as a principal component.

3. The (meth)acrylic emulsion type adhesive composition as described in claim 1 or 2, wherein a content of the sodium salt and/or potassium salt-containing emulsifier is 5 to 95 mass % based on the whole emulsifier.

4. The (meth)acrylic emulsion type adhesive composition as described in claim 1 or 2, wherein a content of sodium hydroxide and/or potassium hydroxide is 8 to 85 mass % based on the whole neutralizing agent.

5. An adhesive sheet comprising a substrate sheet and an adhesive layer formed on at least one surface of the substrate sheet by using the (meth)acrylic emulsion type adhesive composition as described in claim 1 or 2.

6. The adhesive sheet as described in claim 5, wherein ΔYI measured after the adhesive sheet is adhered on a slide glass and left standing for 168 hours under an atmosphere of 130°C is 1.0 or less.
